# EUROPÄISCHE PATENTSCHRIFT

(11) **EP 3 599 359 B1**
(45) Veröffentlichungstag und Bekanntmachung des Hinweises auf die Patenterteilung: **08.03.2023**
(21) Anmeldenummer: 19185682.2
(22) Anmeldetag: 11.07.2019
(51) Int. Cl.: F02D 13/02, F02D 41/10, F02D 41/00, F02D 41/14

(54) **VERFAHREN ZUM STEUERN UND/ODER REGELN DES BETRIEBS EINES VERBRENNUNGSMOTORS, INSBESONDERE EINES VERBRENNUNGSMOTORS EINES KRAFTFAHRZEUGS, INSBESONDERE ZUMINDEST TEILWEISE ARBEITEND NACH DEM MILLER-VERFAHREN**
METHOD FOR CONTROLLING AND / OR REGULATING THE OPERATION OF A COMBUSTION ENGINE, ESPECIALLY A COMBUSTION ENGINE OF A MOTOR VEHICLE, ESPECIALLY AT LEAST PARTIALLY OPERATING ACCORDING TO THE MILLER METHOD
PROCÉDÉ DE COMMANDE ET / OU DE RÉGULATION DU FONCTIONNEMENT D'UN MOTEUR À COMBUSTION INTERNE, EN PARTICULIER D'UN MOTEUR À COMBUSTION INTERNE D'UN VÉHICULE AUTOMOBILE, EN PARTICULIER FONCTIONNANT PARTIELLEMENT SELON LE PROCÉDÉ DE MILLER

(30) Priorität: 24.07.2018 DE 102018212247
(43) Veröffentlichungstag der Anmeldung: 29.01.2020
(73) Patentinhaber: Volkswagen AG, 38440 Wolfsburg (DE)
(72) Erfinder: Thaler, Tim, 30161 Hannover (DE)

(56) Entgegenhaltungen:
- EP-A1- 2 054 601
- EP-B1- 2 054 601
- WO-A1-2017/023333
- DE-A1-102007 039 210
- DE-A1-102012 024 318
- US-A1- 2016 281 615

## Beschreibung

Die Erfindung betrifft ein Verfahren zum Steuern und/oder Regeln des Betriebs eines Verbrennungsmotors, insbesondere eines Verbrennungsmotors eines Kraftfahrzeugs, insbesondere zumindest teilweise arbeitend nach dem Miller-Verfahren.

Im Stand der Technik sind zunächst unterschiedliche Verfahren zum Steuern und/oder Regeln des Betriebs eines Verbrennungsmotors bekannt, insbesondere auch der sogenannte "Miller-Motor" bzw. der Verbrennungsmotor der gemäß dem sogenannten Miller-Verfahren betrieben wird. Auch bei derartigen "Miller-Motoren" ist die relative Lage bzw. Positionierung einer Einlassnockenwelle zu einer Kurbelwelle zur Steuerung von Einlassventilen verstellbar und/oder einstellbar. Anders ausgedrückt, über die Einstellung der relativen Lage der Einlassnockenwelle können die Einlassventile von "spät" auf "früh" (und umgekehrt) verstellt werden. Die Verstellung bzw. Einstellung der relativen Lage bzw. der relativen Positionierung der Einlassnockenwelle zur Kurbelwelle wird mit Hilfe von Regel-Stellwerten des Motorsteuergeräts gesteuert und/oder geregelt. Im Allgemeinen weist der Regel-Stellwert des Motorsteuergerätes zur Steuerung der Einlassnockenwelle für die Verstellung der Einlassnockenwelle bzw. der Einlassventile auf den Endpunkt "spät" einen bestimmten zweiten Wert, insbesondere den Wert "1" auf bzw. zur Verstellung der Einlassnockenwelle bzw. der Einlassventile auf den Endpunkt "früh" einen bestimmten zweiten Wert, insbesondere den Wert "0" auf. Bei der Ansteuerung der Einlassnockenwelle insbesondere mit dem Regel-Stellwert "1" wird eine entsprechende Luftmenge in die Brennkammer angesaugt, bis der Zylinder den sogenannten Totpunkt (insbesondere den Regel-Stellwert = "1") erreicht. In diesem Fall schließt das jeweilige Einlassventil "spät". Durch eine entsprechende Verstellung, beispielsweise durch Ansteuerung der Einlassnockenwelle mit einem geringeren Wert, beispielsweise insbesondere 0,5 oder 0,6 wird der Schließzeitpunkt des jeweiligen Einlassventils über die Ansteuerung der Einlassnockenwelle von "spät" auf "früh" eingestellt bzw. verstellt. Dadurch wird weniger Luft in die Brennkammer angesaugt und dann bis zum Totpunkt expandiert. Hierdurch bedingt wird in der Brennkammer dann - thermodynamisch betrachtet - kühlere Luft komprimiert und zur Explosion gebracht. Die Klopfneigung des Motors wird dadurch verringert. Die Klopfneigung des Verbrennungsmotors, das sogenannte "Motorklopfen" entsteht insbesondere bei hohen Gastemperaturen in der Brennkammer, was zu irregulären Verbrennungserscheinungen führen kann, insbesondere auch zu etwaigen Motorschäden führen kann. Daher wird versucht der Klopfneigung des Verbrennungsmotors über die entsprechende Einstellung der Einlassnockenwelle bzw. über die Steuerung der Einlassventile, also durch die entsprechende Ansteuerung der relativen Lage bzw. Positionierung der Einlassnockenwelle zur Kurbelwelle einer Klopfneigung des Verbrennungsmotors entsprechend entgegen zu wirken.

Grundsätzlich wird bei einem sogenannten "Miller-Motor" weniger Luft verbrannt und der Wirkungsgrad ist besser bzw. erhöht, da der Zündwinkel des Motors optimiert ist. Der bei einem Miller-Motor vorliegende Luftmangel-Ausgleich wird durch höhere Ladedrücke zumindest teilweise kompensiert, insbesondere mit Hilfe eines vorhandenen Turboladers. So wird bei der Betätigung des Fahrpedals durch den Fahrer ein höherer Soll-Lastpunkt des Verbrennungsmotors bei einem Lastsprung angesteuert. Es erfolgt hierbei das Verstellen bzw. die Einstellung der Einlassnockenwelle von "früh" nach "spät", so dass dann die jeweiligen Einlassventile entsprechend spät schließen und grundsätzlich - verglichen zu dem Zustand bevor der Fahrer das Fahrpedal betätigt hat - mehr Luft in die Brennkammer gesogen wird, insbesondere um den zu dem höheren Soll-Lastpunkt korrespondierenden höheren Ist-Lastpunkt des Verbrennungsmotors auch zu realisieren.

So ist beispielsweise aus der DE 10 2012 014 713 A1 ein Verfahren zum Betreiben eines Verbrennungsmotors bekannt, bei dem eine dynamische Sollgröße für den Verbrennungsmotor in Abhängigkeit von einer Differenz zwischen einer Lastanforderung an den Verbrennungsmotor und einer aktuellen Lastabgabe des Verbrennungsmotors bestimmt wird. Anders ausgedrückt, es wird eine dynamische Sollgröße ermittelt für die Differenz eines erhöhten Soll-Lastpunktes zu einem bestehenden bzw. anliegenden Ist-Lastpunkt eines Verbrennungsmotors. Zusätzlich ist ein Verdichter zum Einstellen einer Ladungsdichte in einem Saugrohr des Verbrennungsmotors vorgesehen sowie auch die üblichen Einstellmittel, also insbesondere die über die Einlassnockenwelle ansteuerbaren Einlassventile vorhanden sind. In Abhängigkeit der zuvor beschriebenen dynamischen Sollgröße wird nun einer Liefergrad und die Ladungsdichte entsprechend eingestellt. Insbesondere wird hierbei der sogenannte Liefergrad mit Hilfe der Steuerung der Einlassventile bzw. der Verstellung der Einlassnockenwelle realisiert. Hierbei wird durch die Ermittlung der dynamischen Sollgröße, insbesondere eines Dynamikfaktors, aus der Geschwindigkeit der Fahrpedalverstellung auch eine dynamische Beeinflussung der Sollgröße des Liefergrades durchgeführt bzw. realisiert. Oder nochmal anders ausgedrückt, der Liefergrad des Verbrennungsmotors wird in Abhängigkeit der dynamischen Sollgröße, insbesondere auch in Abhängigkeit der jeweiligen Beschleunigung der Fahrpedalbetätigung durch den Fahrer eingestellt bzw. gesteuert und/oder geregelt.

So ist aus der WO 2017/023333 A1 ein Verfahren zum Steuern und/oder Regeln des Betriebs eines Verbrennungsmotors eines Kraftfahrzeuges bekannt, bei dem mehrere unterschiedliche Soll-Lastpunkte und/oder unterschiedliche Ist-Lastpunkte des Verbrennungsmotors durch eine entsprechende Fahrpedalbetätigung ansteuerbar sind. Bei einem Lastsprung des Verbrennungsmotors wird dann ein bestimmter höherer zweiter Soll-Lastpunkt angesteuert. Hierbei sind für die Phase zwischen dem Zeitpunkt des Beginns des Soll-Lastsprunges bis zu dem Zeitpunkt des Endes des zu dem Soll-Lastsprung korrespondierenden Ist-Lastsprunges bestimmte Regel-Stellwerte zur Steuerung der relativen Lage der Einlassnockenwelle abgespeichert, wobei für den bestimmten Regelzeitraum bestimmte Grenz-Regelstellwerte definiert sind. Es erfolgt ein entsprechender Vergleich, wobei dann zur Ansteuerung der relativen Lage der Einlassnockenwelle der jeweilige niedrigere Stellwert verwendet wird.

Schließlich wird in der EP 2 054 601 A1 ein Verfahren zur Steuerung und Regeln des Betriebs eines Verbrennungsmotors eines Kraftfahrzeugs beschrieben, bei dem die Verstellung / Einstellung eines Schließverlaufes eines Einlassventils abhängig vom Luftdruck (Atmosphärendruck) gesteuert wird.

Bei den im Stand der Technik bekannten Verfahren, insbesondere zum Steuern und/oder Regeln des Betriebs eines Verbrennungsmotors eines Kraftfahrzeugs, die zumindest teilweise auch nach dem Miller-Verfahren arbeiten, sind diese Verfahren teilweise noch nicht optimal ausgebildet. Insbesondere auch um den CO-2-Ausstoß bei mittels Abgasturboladern aufgeladenen Otto-Motoren zu reduzieren, kommt das Miller-Verfahren zum Einsatz. Hierdurch wird im Ansaugtakt des Verbrennungsmotors eine Expansion und damit eine Abkühlung der Frischluft im Brennraum erzielt. Hierdurch wird die Klopfneigung, das sogenannte "Motorklopfen" des Verbrennungsmotors reduziert, wobei durch ein früheres Zünden des Luft-Kraftstoff-Gemisches innerhalb der Brennkammer die Schwerpunktlage der Verbrennung des Verbrennungsmotors hin zu höheren Wirkungsgraden verschoben werden kann.

Die bei dem Miller-Verfahren mit dem früheren Schließen der Einlassventile einhergehende Reduzierung des Liefergrades des Verbrennungsmotors führt im Vergleich zu Verbrennungsmotoren mit konventionellen Brennverfahren im gleichen Lastpunkt zu einem höheren Saugrohrdruckniveau und damit zu einem höheren durch den Abgasturbolader zu gewährleistenden Aufladegrad.

Bei den bisher im Stand der Technik bekannten Verfahren wird bei Lastsprüngen einem trägen Druckaufbau des Abgasturboladers entgegengewirkt, indem die relative Lage der Einlassnockenwelle zur Erhöhung des Massenstromes in Richtung "spät", also in Richtung späterer Öffnungswinkel der Einlassventile verstellt wird. Hierdurch erhöht sich auch die effektive Verdichtung des Gemisches im Brennraum. Im gleichen Maße wird die Auslassnockenwelle in Richtung früherer Öffnungswinkel der Auslassventile verstellt, um den Einfluss des ansteigenden Abgasgegendruckes auf die Frisch-Luft-Füllung zu reduzieren. Diese insbesondere dynamische Einlassnockenwellenverstellung erfolgt geregelt anhand der Differenz zwischen der für den höheren Soll-Lastpunkt benötigten und der aktuell im Brennraum befindlichen Frisch-Luft-Füllung, insbesondere basierend auf im Motorsteuergerät abgespeicherten und/oder berechneten Regel-Stellwerten.

Wie die Praxis aber gezeigt hat, ist die dynamische Einlassnockenwellenverstellung anhand der oben beschriebenen Differenz teils noch nicht optimal bzw. problematisch, denn je nach spezifischem Lastsprung und/oder der Historie des Motors kann das Anheben der zuvor genannten effektiven Verdichtung die Neigung des Motors zu irregulären Verbrennungsereignissen erhöhen, insbesondere die Klopfneigung des Verbrennungsmotors erhöhen bzw. kann dann das sogenannte "Motorklopfen" auftreten. Deshalb wird bisher im Stand der Technik beim Überschreiten einer definierten Lastschwelle und/oder bei der Realisierung eines bestimmten Lastsprunges die zuvor genannte dynamische Einlassnockenwellenverstellung deaktiviert, so dass insbesondere bei stationär kritischen Betriebspunkten des Verbrennungsmotors dann keine Steigerung der effektiven Verdichtung mehr erfolgt, so dass der Verbrennungsmotor dann hierdurch entsprechend geschützt ist. Allerdings kann durch die Deaktivierung der Einlassnockenwellenverstellung dann auch nicht mehr das komplette Potential beim Füllungsaufbau des Luft-Kraftstoff-Gemisches innerhalb der Brennkammer gehoben bzw. realisiert werden. Der Verbrennungsmotor bzw. dessen Ansprechverhalten reagiert "träge".

Der Erfindung liegt daher die Aufgabe zugrunde, die im Stand der Technik bekannten Verfahren zum Steuern und/oder Regeln des Betriebs eines Verbrennungsmotors nun so auszugestalten und weiterzubilden, dass die eingangs genannten Nachteile vermieden sind, insbesondere eine Steuerung und/oder Regelung der Einlassnockenwelle derart realisierbar ist, wobei im Verbrennungsmotor dann eine effektive Verdichtung, insbesondere ohne die Gefahr des Motorklopfens, ermöglicht ist, insbesondere ein träges Ansprechverhalten des Verbrennungsmotors verringert und/oder vermieden ist.

Die zuvor aufgezeigte Aufgabe ist nun zunächst durch die Merkmale des Patentanspruches 1 gelöst.

Das Verfahren darf nun zunächst ganz grundsätzlich bzw. dessen entsprechende einzelnen Verfahrensschritte wie folgt näher beschrieben werden:
Bei dem Verfahren zum Steuern und/oder Regeln des Betriebs eines Verbrennungsmotors, insbesondere des Verbrennungsmotors eines Kraftfahrzeugs, wobei insbesondere der Verbrennungsmotor zumindest teilweise nach dem Miller-Verfahren betrieben werden kann bzw. arbeitet, können nun zunächst mehrere unterschiedliche Soll-Lastpunkte und/oder mehrere unterschiedliche Ist-Lastpunkte des Verbrennungsmotors, insbesondere durch eine entsprechende Fahrpedalbetätigung angesteuert werden.

Bei einem entsprechenden Lastsprung, nämlich einer Lasterhöhung des Verbrennungsmotors, wird ausgehend von mindestens einem bestimmten angesteuerten geringeren ersten Soll-Lastpunkt und/oder ausgehend von einem zu dem ersten Soll-Lastpunkt realisierten ersten Ist-Lastpunkt dann ein - verglichen zum ersten Soll-Lastpunkt und/oder verglichen zum realisierten Ist-Lastpunkt - bestimmter höherer zweiter Soll-Lastpunkt angesteuert. Letzteres wird insbesondere durch eine entsprechende Fahrpedalbetätigung des Fahrers realisiert, beispielsweise wenn der Fahrer das Kraftfahrzeug insbesondere schnell durch eine relativ abrupte Fahrpedalbetätigung (starkes "Gas geben") stark beschleunigen möchte.

Die relative Lage bzw. die relative Positionierung einer Einlassnockenwelle zu einer Kurbelwelle zur Steuerung von Einlassventilen ist entsprechend verstellbar und/oder einstellbar. Insbesondere ist über die relative Lage der Einlassnockenwelle die jeweilige Steuerung der Einlassventile von "früh" auf "spät" (oder umgekehrt) realisierbar. Die jeweiligen bestimmten relativen Lagen der Einlassnockenwelle zur Kurbelwelle werden grundsätzlich mit Hilfe von Regel-Stellwerten des Motorsteuergerätes gesteuert und/oder geregelt. Hierbei sind Regel-Stellwerte für die Steuerung der Einlassnockenwelle bzw. für die Steuerung der Einlassventile zwischen dem Stellwert "1", für die Endstellung "spät" und dem Stellwert "0", für die Endstellung "früh" definiert. Die jeweiligen bestimmten relativen Lagen der Einlassnockenwelle zur Kurbelwelle werden daher grundsätzlich mit Hilfe von Regel-Stellwerten des Motorsteuergerätes definiert und/oder gesteuert, die insbesondere zwischen dem Stellwert "1" und "0" liegen (beispielsweise 0,6, 0,7, 0,8, 0,9 etc.).

Für zumindest einen bestimmten Regelzeitraum zur Realisierung des Lastsprunges, nämlich einer Lasterhöhung, nämlich zwischen dem Zeitpunkt des Beginns des Soll-Lastsprunges des Verbrennungsmotors bzw. von dem Beginn der jeweiligen Soll-Anforderung bis zu dem Zeitpunkt des Endes des zu dem Soll-Lastsprung korrespondierenden Ist-Lastsprunges, also bis zu dem Zeitpunkt wo der Ist -Lastpunkt den gewünschten (zweiten höheren) Soll-Lastpunkt im Wesentlichen erreicht hat bzw. wo der Ist-Lastpunkt dem höheren zweiten Soll-Lastpunkt entspricht, ist ein bestimmter Regel-Stellwertverlauf und/oder sind bestimmte Regel-Stellwerte zur Steuerung der relativen Lage der Einlassnockenwelle im Motorsteuergerät abgespeichert und/oder abgelegt.

Zumindest für den zuvor genannten bestimmten Regelzeitraum ist ein Grenz-Regel-Stellwertverlauf bestimmt und/oder sind Grenz-Regel-Stellwerte definiert und/oder werden berechnet, wobei dann zu bestimmten jeweiligen Zeitpunkten innerhalb des Regelzeitraumes, insbesondere permanent bzw. kontinuierlich, ein Vergleich der jeweiligen Regel-Stellwerte mit den jeweiligen Grenz-Regel-Stellwerten erfolgt, und wobei dann zur Ansteuerung der relativen Lage bzw. Positionierung der Einlassnockenwelle der jeweilige niedrige Stellwert (der beiden zuvor genannten Werte, also entweder der entsprechende niedrigere Regel-Stellwert oder der entsprechende niedrigere Grenz-Regel-Stellwert) verwendet wird. Anders ausgedrückt, die Steuerung des Stellweges der Einlassnockenwelle wird situativ begrenzt, um ein maximal nutzbares effektives Verdichtungsverhältnis in der Brennkammer zu realisieren, wobei das Motorklopfen aber mit Hilfe von Grenz-Regel-Stellwerten verhindert wird. Insbesondere die "Lasthistorie" des Verbrennungsmotors wird dabei berücksichtigt. Dies darf im Folgenden noch näher erläutert werden:
Zunächst ist durch die Verwendung des jeweils niedrigeren Stellwertes eine Verstellung der Einlassnockenwelle entsprechend auf diesen niedrigeren Stellwert bzw. auf den jeweiligen niedrigeren Wert begrenzt. Durch die Verwendung des niedrigeren Stellwertes / Wertes wird die Einlassnockenwelle weniger in Richtung spät verstellt als wenn der höhere Wert verwendet werden würde. Insbesondere ist das sogenannte Motorklopfen dadurch vermieden.

Innerhalb des Regelzeitraums sind zunächst für mehrere jeweilige bestimmte Ist-Lastpunkte des Verbrennungsmotors jeweilige bestimmte stationäre Grenz-Regel-Stellwerte definiert bzw. ist für den Regelzeitraum ein stationärer Grenz-Regel-Stellwertverlauf bestimmt und/oder definiert bzw. im Motorsteuergerät abgelegt. Durch den stationären Grenz-Regel-Stellwertverlauf sind im Regelzeitraum entsprechende stationäre Grenz-Regel-Stellwerte definiert. Die zuvor genannten bestimmten stationären Grenz-Regel-Stellwerte sind für stationäre Ist-Lastpunkte des Verbrennungsmotors, insbesondere auf einem Prüfstand bei stationären bestimmten Ist-Lastzuständen des Verbrennungsmotors ermittelt worden. Letztere sind dann im Motorsteuergerät abgelegt und/oder abgespeichert, insbesondere durch Parameter-Datensätze, durch entsprechende Kennfelder und/oder es ist ein entsprechender stationärer Grenz-Regel-Stellwertverlauf dann abgespeichert. Denkbar ist aber auch, dass für unterschiedliche bestimmte Lastsprünge entsprechende jeweilige für einen bestimmten Lastsprung dann jeweilige bestimmte stationäre Grenz-Regel-Stellwerte und/oder jeweilige bestimmte stationäre Grenz-Regel-Stellwertverläufe abgelegt und/oder abgespeichert sind.

Bei dem Verfahren werden aber nun sogenannte dynamische Grenz-Regel-Stellwerte bzw. ein dynamischer Grenz-Regel-Stellwertverlauf ermittelt und/oder berechnet, nämlich mit Hilfe der jeweiligen bestimmten stationären Grenz-Regel-Stellwerte und/oder mit Hilfe des jeweiligen stationären Grenz-Regel-Stellwertverlaufes. Hierbei werden die jeweiligen dynamischen Grenz-Regel-Stellwerte bzw. der jeweilige dynamische Grenz-Regel-Stellwertverlauf mit Hilfe der jeweiligen bestimmten stationären Grenz-Regel-Stellwerte in Abhängigkeit einer jeweiligen Brennraumaufheizung bzw. in Abhängigkeit eines Verlaufes einer Brennraumaufheizung ermittelt und/oder berechnet, insbesondere nämlich basierend auf bestimmten charakteristischen Verzögerungszeiten für eine jeweilige Brennraumaufheizung.

Zum Hintergrund darf nochmals darauf hingewiesen werden, dass bei stationären, insbesondere bei konstanten Ist-Lastpunkten des Verbrennungsmotors sich ein thermischer Gleichgewichtszustand im Brennraum einstellt. Durch entsprechende Versuche, insbesondere auf dem Prüfstand, lässt sich ermitteln, welche Steigerung des effektiven Verdichtungsverhältnisses mit Hilfe der Verstellung der Einlassnockenwelle für diesen bestimmten jeweiligen stationären Ist-Lastpunkt maximal möglich ist. Anders ausgedrückt, ein entsprechender bestimmter stationärer Grenz-Regel-Stellwert lässt sich für einen jeweiligen bestimmten Ist-Lastpunkt entsprechend ermitteln. Ändert sich nun der Ist-Lastpunkt, so ändert sich auch das stationäre thermische Gleichgewicht. Dies geschieht jedoch nicht sprunghaft, sondern mit der Trägheit der Temperaturänderung in der Wandung des Brennraums, also in Abhängigkeit der Temperatur des Brennraums und/oder des Energieeintrags in den Brennraum. Es können nun aus den bestimmten stationären Grenz-Regel-Stellwerten in Abhängigkeit von ermittelten "charakteristischen Verzögerungszeiten für die jeweiligen Brennraumaufheizungen "dann dynamische Grenz-Regel-Stellwerte ermittelt und/oder berechnet werden. Diese dynamischen Grenz-Regel-Stellwerte bzw. die sich aus dem dynamischen Grenz-Regel-Stellwertverlauf sich ergebenden dynamischen Grenz-Regel-Stellwerte werden bei dem zuvor genannten Vergleich der jeweiligen Werte bei der besonders bevorzugten Ausführungsform des erfindungsgemäßen Verfahrens dann als jeweilige Grenz-Regel-Stellwerte verwendet. Bei dem zuvor genannten Vergleich der jeweiligen Werte innerhalb des zuvor genannten Regelzeitraumes werden daher die Regel-Stellwerte mit den jeweiligen Grenz-Regel-Stellwerten verglichen, wobei diese Grenz-Regel-Stellwerte dann die zuvor genannten dynamischen Grenz-Regel-Stellwerte sind, wie zuvor beschrieben. Hierbei werden für jeweilige Brennraumaufheizungen charakteristische Werte bzw. charakteristische Verzögerungszeiten ermittelt und/oder sind entsprechend zuvor auf einem Prüfstand, insbesondere auch für jeweilige unterschiedliche Lastsprünge, ermittelt worden, wobei dann der jeweilige Wert einer Verzögerungszeit den Zeiträumen entspricht bzw. der Verzögerungszeit entspricht bis der Verbrennungsmotor seinen neuen stationären Aufheizzustand, insbesondere mit einer konstanten Temperatur der Brennkammerwandung erreicht hat. Oder nochmals anders ausgedrückt: Es sind bzw. werden charakteristische Verzögerungszeiten, insbesondere für bestimmte unterschiedliche Lastsprünge, abgespeichert und/oder abgelegt bzw. zuvor auf Prüfständen ermittelt. Hierbei entspricht die jeweilige charakteristische Verzögerungszeit bzw. der jeweilige Wert einer entsprechenden Verzögerungszeit bei der der Verbrennungsmotor, wenn dieser einen Ist-Lastpunkt, insbesondere den gewünschten Lastpunkt erreicht hat, danach dann auch seinen neuen stationären Aufheizzustand für diesen Ist-Lastpunkt erreicht hat. Insbesondere wird damit auch die "Lasthistorie" des Verbrennungsmotors bei der Steuerung des Verbrennungsmotors berücksichtigt.

Der Druck im Ansaugtrakt wird mit Hilfe eines vorhandenen Abgasturboladers zumindest teilweise gesteuert und/oder realisiert, insbesondere ist durch das erfindungsgemäße Verfahren die Trägheit des Verbrennungsmotors bei Lastsprüngen, insbesondere Lasterhöhungen vermieden, wobei das erfindungsgemäße Verfahren insbesondere bei einem als Otto-Motor ausgeführten Verbrennungsmotor entsprechend realisierbar ist. Es ist nun ein Steuer- und/oder Regelkreis vorgesehen, wobei mindestens ein erstes als Vergleichsglied ausgeführtes Schaltglied und mindestens ein zweites als zeitliches Verzögerungsglied ausgeführtes Schaltglied vorhanden ist.

Über einen ersten Regelpfad werden zunächst dem ersten Schaltglied die vom Motorsteuergerät grundsätzlich im Motorsteuergerät abgespeicherten Regel-Stellwerte zugeleitet.

Es ist ein zweiter Regelpfad vorgesehen, der zwei Teilpfade aufweist, wobei über den ersten Teilpfad dem zweiten Schaltglied ein stationärer Grenz-Regel-Stellwert zugeleitet wird und über den zweiten Teilpfad ein Wert für eine charakteristische Verzögerungszeit der Brennraumaufheizung zugeleitet wird.

Das zweite Schaltglied ermittelt basierend auf dem dem zweiten Schaltglied zugeleiteten Wert einen dynamischen Grenz-Regel-Stellwert.

Mit Hilfe des ersten Schaltgliedes, wobei dem ersten Schaltglied der dynamische Grenz-Regel-Stellwert des zweiten Schaltgliedes zugeleitet wird, erfolgt die Minimumauswahl und/oder ein Vergleich, wobei der jeweilige niedrigere Wert bzw. Stellwert zur Ansteuerung der relativen Lage der Einlassnockenwelle verwendet wird, so dass die Verstellung der Einlassnockenwelle in Richtung "spät" maximal auf diesen Wert / Stellwert begrenzt ist.

Wie bereits zuvor erwähnt, ist grundsätzlich der Regel-Stellwertverlauf im Motorsteuergerät abgespeichert. Auch die übrigen Verläufe und/oder Stellwerte / Werte können im Motorsteuergerät abgespeichert sein und/oder berechnet werden, insbesondere mit Hilfe eines Datenspeichers und/oder Mikroprozessors. Die entsprechenden Regelungen und/oder Schaltungen bzw. das erfindungsgemäße Verfahren kann daher insbesondere mit Hilfe des Motorsteuergerätes und/oder eines Mikroprozessors bzw. Mikrocomputers realisiert werden.

Im Ergebnis sind die eingangs genannten Nachteile vermieden und entsprechende Vorteile erzielt.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- Fig. 1: in schematischer Darstellung das bei einem Verbrennungsmotor realisierte erfindungsgemäße Verfahren, insbesondere einen Grenz-Regel-Stellwertverlauf und/oder bestimmte Grenz-Regel-Stellwerte für einen bestimmten Regelzeitraum, nämlich für einen Lastsprung, insbesondere für eine Lasterhöhung des Verbrennungsmotors, sowie
- Fig. 2: ein schematisches Blockschaltbild eines Teil-Ausschnittes des Steuersystems zum Steuern und/oder Regeln des Betriebs eines Verbrennungsmotors gemäß dem erfindungsgemäßen Verfahren.

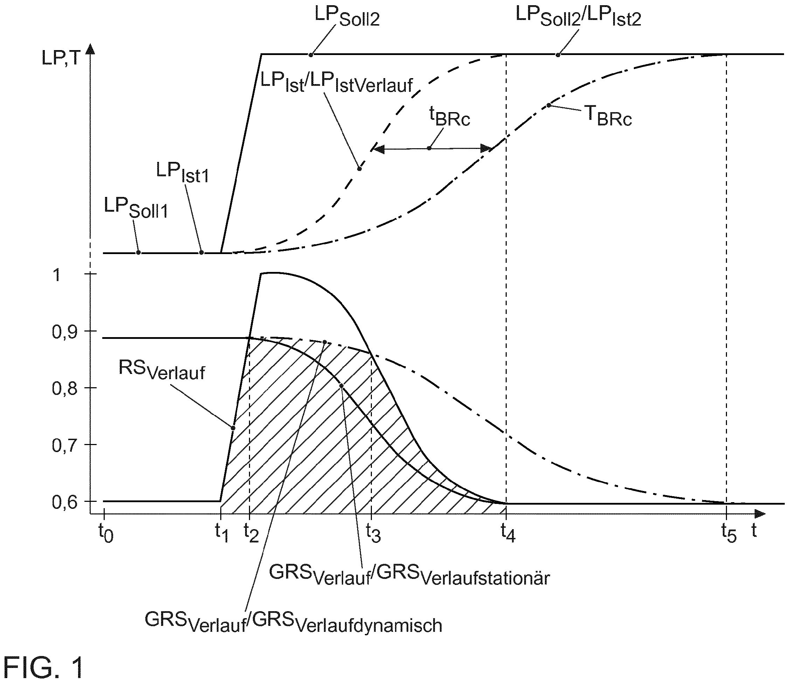

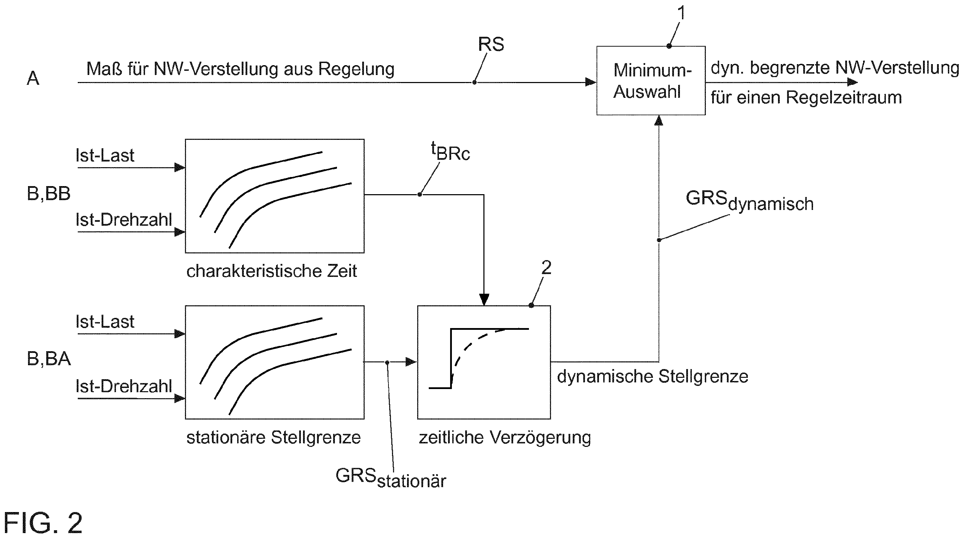

Die Fig. 1 und 2 zeigen - zumindest teilweise - ein Verfahren zum Steuern und/oder Regeln des Betriebs eines hier nicht im Einzelnen dargestellten Verbrennungsmotors, insbesondere eines Verbrennungsmotors eines ebenfalls hier nicht dargestellten Kraftfahrzeuges. Hierbei wird der Verbrennungsmotor insbesondere zumindest teilweise nach dem Miller-Verfahren gesteuert und/oder geregelt.

Fig. 1 zeigt über den Verlauf der Zeit t einen Lastsprung, nämlich eine Lasterhöhung des Verbrennungsmotors. In bekannter Weise sind bei einem Verbrennungsmotor mehrere unterschiedliche Soll-Lastpunkte und/oder Ist-Lastpunkte des Verbrennungsmotors, insbesondere durch eine entsprechende Fahrpedalbetätigung ansteuerbar.

Fig. 1 zeigt hier einen Lastsprung, nämlich eine Lasterhöhung des Verbrennungsmotors ausgehend von mindestens einem bestimmten angesteuerten geringeren Soll-Lastpunkt LP_{Soll1} und/oder ausgehend von einem zu dem ersten Soll-Lastpunkt LP_{Soll1}, realisierten ersten Ist-Lastpunkt LP_{Ist1} zu einem bestimmten höheren zweiten Soll-Lastpunkt LP_{Soll2}. Hierbei ist der höhere zweite Soll-Lastpunkt LP_{Soll2} verglichen zum ersten Soll-Lastpunkt LP_{Soll1} bzw. verglichen zum entsprechenden Ist-Lastpunkt LP_{Ist1} entsprechend höher bzw. größer, so wie aus Fig. 1 gut ersichtlich und/oder durch den Verlauf der den Lastsprung verdeutlichenden Linie entsprechend dargestellt. Weiterhin ist erkennbar aus Fig. 1, dass die Ist-Lastpunkte LP_{Ist} des Verbrennungsmotors während des Lastsprunges von LP_{Ist1} bis LP_{Soll2} / LP_{Ist2} hochlaufen, insbesondere entsprechend zeitlich verzögert hochlaufen. Dies ist erkennbar aus der Darstellung der Fig. 1, insbesondere der Darstellung der Lastpunkte LP auf der (oberen) y-Achse über die Zeit t.

Die relative Lage bzw. relative Positionierung einer Einlassnockenwelle zu einer Kurbelwelle zur Steuerung von Einlassventilen ist entsprechend verstellbar und/oder einstellbar. Über die relative Lage der Einlassnockenwelle ist die jeweilige Steuerung der Einlassventile von "früh" auf "spät" (oder umgekehrt) realisierbar, wie bereits eingangs erläutert. Die jeweiligen bestimmten relativen Lagen der Einlassnockenwelle zur Kurbelwelle werden zunächst grundsätzlich mit Hilfe von Regel-Stellwerten des Motorsteuergerätes (vgl. auch hierzu Fig. 2) definiert und/oder gesteuert. Hierbei nehmen die Regel-Stellwerte Werte zwischen dem Stellwert "1", für eine "späte" Endlage und dem Stellwert "0", für eine "frühe" Endlage ein.

In Fig. 1 sind die Regel-Stellwerte RS bzw. der entsprechende Verlauf der Regel-Stellwerte RS_{Verlauf}, also der entsprechende Regel-Stellwertverlauf RS_{Verlauf} durch die entsprechende Linie dargestellt. Der entsprechende Regel-Stellwertverlauf RS_{Verlauf} ist über der Zeit t dargestellt, wobei auf der (unteren) y-Achse dann der entsprechende Regel-Stellwert RS, insbesondere hier Werte zwischen "1" und "0" dargestellt sein sollen, wie auf der y-Achse angedeutet.

Für einen bestimmten Regelzeitraum zur Realisierung des Lastsprunges, nämlich der Lasterhöhung, nämlich zumindest zwischen dem Zeitpunkt t₁ des Beginns des Soll-Lastsprunges bis zu dem Zeitpunkt t₄ des Endes des zu dem Soll-Lastsprunges korrespondierenden Ist-Lastsprunges ist ein bestimmter Regel-Stellwertverlauf RS_{Verlauf} und/oder sind bestimmte Regel-Stellwerte RS zur Steuerung der relativen Lage der Einlassnockenwelle abgespeichert, insbesondere im Motorsteuergerät grundsätzlich abgelegt, wie aus Fig. 1 erkennbar.

Wie aus der Fig. 1 weiter deutlich wird, liegt zum Zeitpunkt to bzw. zwischen den Zeitpunkten to und t₁ ein erster Ist-Lastpunkt LP_{Ist1} an, der durch einen ersten Soll-Lastpunkt LP_{Soll1} durch den Fahrer, insbesondere durch die Fahrpedalstellung definiert wird. Nun fordert der Fahrer zum Zeitpunkt t₁ einen Lastsprung, nämlich eine Lasterhöhung an, betätigt insbesondere das Fahrpedal des Fahrzeugs, so dass nun der zweite Soll-Lastpunkt LP_{Soll2} regeltechnisch angesteuert wird, um den Ist-Lastpunkt LP_{Ist1} des Verbrennungsmotors in Richtung des zweiten Soll-Lastpunkt LP_{Soll2} zu verschieben bzw. den Ist-Lastsprung zu realisieren.

Dargestellt in Fig. 1 sind die Ist-Lastpunkte LP_{Ist} des Verbrennungsmotors bzw. der Verlauf der Ist-Motorlasten nach der entsprechenden Soll-Lastpunkt-Anforderung, die über die Zeit t, hier vom Zeitpunkt t₁ in Richtung des zweiten Soll-Lastpunktes LP_{Soll2} bis zum Zeitpunkt t₄ hochlaufen, wobei zum Zeitpunkt t₄ der Ist-Lastsprung beendet ist, nämlich der entsprechende Ist-Lastpunkt LP_{Ist} / LP_{Ist2} dann dem zweiten Soll-Lastpunkt LP_{Soll2} entspricht.

Weiterhin ist aus Fig. 1 erkennbar, dass zumindest für den bestimmten Regelzeitraum zwischen den Zeitpunkten t₁ und t₄ zumindest ein Grenz-Regel-Stellwertverlauf GRS_{Verlauf} (hier ein erster und zweiter Grenz-Regel-Stellwertverlauf GRS_{Verlauf}) bestimmt ist und/oder bestimmte Grenz-Regel-Stellwerte GRS definiert sind (oder im Motorsteuergerät berechnet werden können), wobei dann zu bestimmten jeweiligen Zeitpunkten t innerhalb des Regelzeitraumes gemäß dem erfindungsgemäßen Verfahren ein Vergleich der jeweiligen Regel-Stellwerte RS mit den jeweiligen Grenz-Regel-Stellwerten GRS erfolgt und wobei dann zur Ansteuerung der relativen Lage der Einlassnockenwelle der jeweilige niedrigere Stellwert verwendet wird.

Zur Verdeutlichung der Ergebnisse des zuvor genannten Vergleichs ist in Fig. 1 ein bestimmter Bereich zwischen den Zeitpunkten t₁ und t₄ schraffiert dargestellt. Zumindest in diesem Bereich wird der jeweils niedrigere Stellwert zur Verstellung der Einlassnockenwelle verwendet bzw. ist die Verstellung der Einlassnockenwelle auf diesen Wert insbesondere dann entsprechend maximal in Richtung "spät" begrenzt.

Wie nun weiter aus der Fig. 1 deutlich wird, sind nun hier innerhalb des Regelzeitraumes, insbesondere hier zwischen den Zeitpunkten t₁ und t₄ mehreren jeweiligen bestimmten Ist-Lastpunkten LP_{Ist} jeweilige bestimmte stationäre Grenz-Regel-Stellwerte GRS_{stationär} zugeordnet bzw. entsprechend definiert und/oder für den Regelzeitraum ist ein stationärer Grenz-Regel-Stellwertverlauf GRS_{Verlaufstationär} bestimmt und/oder definiert, wie durch den entsprechenden Verlauf der Linie schematisch dargestellt. Insbesondere sind entsprechende Grenz-Regel-Stellwerte GRS_{stationär} für bestimmte Ist-Lastpunkte LP_{Ist} des Verbrennungsmotors abgelegt (insbesondere in Kennfeldern abgelegt und/oder entsprechend "bedated"). Diese bestimmten jeweiligen stationären Grenz-Regel-Stellwerte GRS_{stationär}, die bestimmten jeweiligen stationären Ist-Lastpunkten LP_{Ist} des Verbrennungsmotors zugeordnet sind, sind insbesondere auf einem Prüfstand bei stationären bestimmten Ist-Lastzuständen des Verbrennungsmotors zuvor ermittelt worden. Die bestimmten stationären Grenz-Regel-Stellwerte GRS_{stationär} sind im Motorsteuergerät abgelegt und/oder abgespeichert, insbesondere als ein Kennfeld und/oder im Motorsteuergerät als stationärer Grenz-Regel-Stellwertverlauf GRS_{Verlaufstationär} abgespeichert.

Der in Fig. 1 erkennbare Grenz-Regel-Stellwertverlauf GRS_{Verlaufstationär} ist hier ein "erster" Grenz-Regel-Stellwertverlauf GRS_{Verlauf}. Bereits diese hierdurch definierten Werte / Stellwerte könnten für den oben genannten Vergleich verwendet werden, wobei dann der jeweilige geringere Wert / Stellwert zur Ansteuerung der relativen Lage der Einlassnockenwelle verwendet wird. Bei der besonders bevorzugten Ausführungsform des erfindungsgemäßen Verfahrens wird jedoch ein jeweiliger dynamischer Grenz-Regel-Stellwert GRS_{dynamisch} für den oben angesprochenen Vergleich verwendet, insbesondere der in Fig. 1 erkennbare "zweite" Grenz-Regel-Stellwertverlauf GRS_{Verlauf} der einen dynamischen Grenz-Regel-Stellwertverlauf GRS_{Verlaufdynamisch} entspricht, dies darf im Folgenden bei der Erläuterung der besonders bevorzugten Ausführungsform der Erfindung dann nochmals näher beschrieben werden.

Insbesondere ist auch denkbar, dass eine Vielzahl derartiger stationärer Grenz-Regel-Stellwertverläufe für die unterschiedlichsten Lastsprünge, also für die unterschiedlichsten Lasterhöhungen im Motorsteuergerät abgespeichert sein können, wobei dann den einzelnen jeweiligen Ist-Lastpunkten des Verbrennungsmotors die entsprechenden stationären Grenz-Regel-Stellwerte für bestimmte Lastsprünge zugeordnet sind. Grundsätzlich sind aber zumindest insbesondere den jeweiligen bestimmten Ist-Lastpunkten des Verbrennungsmotors jeweilige bestimmte stationäre Grenz-Regel-Stellwerte GRS_{stationär} zugeordnet, insbesondere unabhängig von gewünschten Lastsprüngen.

Wie die Fig. 1 weiter zeigt, ist über der Zeit t auch die Brennraumaufheizung T_{BRC} durch die entsprechende Linie für den hier in Fig. 1 dargestellten Lastsprung bzw. die hier dargestellte Lasterhöhung ebenfalls dargestellt. Die entsprechende gestrichelte punktierte Linie T_{BRc} in Fig. 1 soll schematisch die Brennraumaufheizung für den Lastsprung bzw. für die hier dargestellte Lasterhöhung des Verbrennungsmotors darstellen. Diese, insbesondere virtuell ermittelte Linie T_{BRC} ergibt sich und/oder wird definiert aufgrund charakterischer Verzögerungszeiten t_{BRc}, wobei hier in Fig. 1 eine charakteristische Verzögerungszeit t_{BRc} als waagerechte Pfeillinie zwischen den Verläufen LPIst_{Verlauf} und der Linie T_{BRC} beispielhaft dargestellt ist. Jedem Ist-Lastpunkt LP_{Ist} des Verbrennungsmotors ist insbesondere eine jeweilige charakteristische Verzögerungszeit t_{BRc} zugeordnet, insbesondere in einem Kennfeld abgelegt und/oder entsprechend "bedated", wobei diese jeweilige charakteristische Verzögerungszeit bzw. der jeweilige hierdurch definierte Wert einer Verzögerungszeit entspricht, die der Verbrennungsmotor ausgehend von dem Erreichen des jeweiligen Ist-Lastpunkt LP_{Ist} benötigt, bis der Verbrennungsmotor dann seinen neuen stationären Aufheizzustand auch erreicht hat. Oder anders ausgedrückt: Insbesondere jedem unterschiedlichen bestimmten Ist-Lastpunkt LP_{Ist} des Verbrennungsmotors, ist eine, insbesondere auf einem Prüfstand ermittelte jeweilige charakteristische Verzögerungszeit t_{BRc} zugeordnet, mit deren Hilfe sich die in Fig. 1 hier dargestellte (virtuelle) Linie für den Brennraumaufheizung T_{BRC} ergibt. Insbesondere liegt in dem neuen stationären Aufheizstand des Brennraums auch eine entsprechende stationäre neue, insbesondere höhere Temperatur vor, auch dies darf an dieser Stelle noch erwähnt werden.

Mit Hilfe der jeweiligen bestimmten stationären Grenz-Regel-Stellwerte GRS_{stationär} werden in Abhängigkeit der Brennraumaufheizung T_{BRC} bzw. der jeweiligen charakteristischen Verzögerungszeit t_{BRc} (für die jeweilige "charakteristische Brennraumaufheizung") nun dynamische Grenz-Regel-Stellwerte GRS_{dynamisch} ermittelt und/oder berechnet, ebenfalls dargestellt durch die in Fig. 1 erkennbare Linie des hier dargestellten dynamischen Grenz-Regel-Stellwertverlaufes GRS_{Verlaufdynamisch}. Der entsprechende dynamische Grenz-Regel-Stellwertverlauf GRS_{Verlaufdynamisch} hat, wie Fig. 1 erkennen lässt, eine ähnliche Charakteristik wie die Brennraumaufheizung T_{BRC} (nur gespiegelt an einer parallel verschobenen x-Achse). Zur Ermittlung / Berechnung des dynamischen Grenz-Regel-Stellwertverlaufes GRS_{Verlaufdynamisch} bzw. der jeweiligen dynamischen Grenz-Regel-Stellwerte GRS_{dynamisch} wird - anders ausgedrückt - der stationäre Grenz-Regel-Stellwertverlauf GRS_{Verlaufstationär} zeitlich verzögert bzw. regeltechnisch zeitlich verzögert, insbesondere basierend auf den jeweiligen charakteristischen Verzögerungszeiten t_{BRc}.

Bei dem erfindungsgemäßen Verfahren werden nun gemäß der besonders bevorzugten Ausführungsform die jeweiligen dynamischen Grenz-Regel-Stellwerte GRS_{dynamisch} und/oder die sich aus dem dynamischen Grenz-Regel-Stellwertverlauf GRS_{Verlaufdynamisch} ergebenden dynamischen Grenz-Regel-Stellwerte GRS_{dynamisch} als jeweilige Grenz-Regel-Stellwerte GRS für den Vergleich mit den Regel-Stellwerten RS verwendet.

Bei der besonders bevorzugten Ausführungsform des erfindungsgemäßen Verfahrens wird daher der hier in Fig. 1 erkennbare "zweite" Grenz-Regel-Stellwertverlauf GRS_{Verlauf} der dem dynamischen Grenz-Regel-Stellwertverlauf GRS_{Verlaufdynamisch} entspricht, für den oben genannten Vergleich, also die entsprechenden dynamischen Grenz-Regel-Stellwerte GRS_{dynamisch} für den Vergleich mit den Regel-Stellwerten RS verwendet. Der jeweilige niedrigere Wert wird dann für die Durchführung des erfindungsgemäßen Verfahrens gemäß der besonders bevorzugten Ausführungsform, nämlich für die Steuerung / Einstellung der Einlassnockenwelle dann verwendet, insbesondere um die Verstellung der Einlassnockenwelle in Richtung "spät" auf diesen Wert / Stellwert maximal zu begrenzen.

Aus der Fig. 1 ergibt sich aus der Darstellung zwischen den Zeitpunkten t₁ und t₄ der schraffierte Bereich, der hier die Auswahl bzw. den Auswahlbereich der jeweiligen geringeren bzw. niedrigeren Stellwerte verdeutlichen soll. Anders ausgedrückt, die über dem schraffierten Bereich nach oben hervorstehende "Kappe" des Regel-Stellwertverlaufs RS_{Verlauf} wird "abgeschnitten" bzw. werden diese hierdurch definierten Regel-Stellwerte RS bei dem erfindungsgemäßen Verfahren nicht berücksichtigt. Lediglich die zwischen den Zeitpunkten t₁ und t₂ bzw. t₃ und t₄ liegenden, wie die Fig. 1 zeigt, entsprechenden Regel-Stellwerte RS, die insbesondere unterhalb der dynamischen Grenz-Regel-Stellwert GRS_{dynamisch} liegen, also lediglich die in den Zeiträumen t₁ und t₂ bzw. t₃ und t₄ bestimmte Regel-Stellwerte RS werden dann zur Steuerung des erfindungsgemäßen Verfahrens verwendet. Insbesondere in dem Zeitraum zwischen den Zeitpunkten t₂ und t₃ werden für das erfindungsgemäße Verfahren gemäß der besonders bevorzugten Ausführungsform dann die dynamischen Grenz-Regel-Stellwerte GRS_{dynamisch} verwendet. Bei der besonders bevorzugten Ausführungsform wird, wie oben erwähnt, insbesondere für den jeweiligen Vergleich der dynamische Grenz-Regel-Stellwerverlauf GRS_{Verlaufdynamisch} als Grenz-Regel-Stellwertverlauf GRS_{Verlauf} verwendet, da hierbei das größte Potenzial des Verbrennungsmotors, insbesondere ohne die Gefahr des Motorklopfens, realisiert werden kann.

Insbesondere wird das erfindungsgemäße Verfahren bei einem als Otto-Motor ausgeführten Verbrennungsmotor realisiert, wobei der Druck im Ansaugstrakt mit Hilfe eines vorgesehenen Abgasturboladers realisiert und/oder gesteuert wird.

Insbesondere wird dann das jeweilige Kennfeld und/oder der jeweilige dynamische Grenz-Regel-Stellwertverlauf GRS_{Verlaufdynamisch} auch ermittelt und/oder berechnet, basierend auf einem jeweiligen stationären Grenz-Regel-Stellwertverlauf GRS_{Verlaufstationär} sowie basierend auf einer charakteristischen Brennraumaufheizung "T_{BRC}" bzw. auf den hierzu korrespondierenden charakteristischen Verzögerungszeiten t_{BRc}, wie oben erläutert.

Schließlich zeigt Fig. 2 ein schematisches Blockschaltbild, insbesondere eine schematische Darstellung eines Ausschnittes der Steuerung und/oder Regelung bzw. der Durchführung des erfindungsgemäßen Verfahrens mit den Regelpfaden A, B bzw. den Teilpfaden BA, BB.

Wie aus Fig. 2 deutlich wird, wird hierbei zunächst einem Vergleichsglied 1 ein Regel-Stellwert RS zugeleitet, insbesondere über einen ersten Regelpfad A. Über einen zweiten Regelpfad B (Teilpfad BA) wird zunächst einerseits in Abhängigkeit des jeweiligen Ist-Lastpunktes des Verbrennungsmotors und/oder der jeweiligen Ist-Drehzahl des Verbrennungsmotors einem Schaltglied 2 aus hinterlegten / abgespeicherten Kennfeldern bzw. abgespeicherten stationären Grenz-Regel-Stellverläufen GRS_{Verlaufstationär} ein jeweiliger bestimmter stationärer Grenz-Regel-Stellwert GRS_{stationär} zugeleitet, wobei dem gleichen Schaltglied 2 parallel über den Regelpfad / Teilpfad BB wiederum in Abhängigkeit des jeweiligen Ist-Lastpunktes und/oder der jeweilige Ist-Drehzahl des Verbrennungsmotors eine jeweilige charakteristische Verzögerungszeit t_{BRc} zugeleitet wird, die einer Verzögerungszeit entspricht bis der Verbrennungsmotor für den jeweiligen Ist-Lastpunkt LP_{Ist} seinen neuen stationären Aufheizzustand erreicht hat. Das als zeitliches Verzögerungsglied ausgeführte Schaltglied 2 berechnet dann aus dem jeweiligen stationären Grenz-Regel-Stellwert GRS_{stationär} in Abhängigkeit des jeweiligen Wertes der jeweiligen charakteristischen Verzögerungszeit t_{BRc} einen so bestimmten / berechneten jeweiligen dynamischen Grenz-Regel-Stellwert GRS_{dynamisch}, der dem Vergleichsglied 1 zugeleitet wird. Hier erfolgt dann die sogenannte "Minimumauswahl", es wird der niedrigere der dem Vergleichsglied 1 zugeleiteten Werte für die Durchführung des Verfahrens ausgewählt bzw. verwendet, wie bereits oben beschrieben. Die Durchführung dieser zuvor genannten Regelung erfolgt insbesondere permanent bzw. kontinuierlich während eines Lastsprunges bzw. einer gewünschten Lasterhöhung.

Es ist ein Steuer- und/oder Regelkreis vorgesehen, der mindestens ein erstes als Vergleichsglied ausgeführtes Schaltglied 1 und mindestens ein zweites als zeitliches Verzögerungsglied ausgeführtes Schaltglied 2 aufweist. Über einen ersten Regelpfad A werden zunächst den ersten Schaltglied 1 die vom Motorsteuergerät grundsätzlich im Motorsteuergerät abgespeicherten Regel-Stellwerte RS zugeleitet. Es ist ein zweiter Regelpfad B vorgesehen, der zwei Teilpfade BA bzw. BB aufweist, wobei über einen ersten Teilpfad BA dem zweiten Schaltglied 2 ein stationärer Grenz-Regel-Stellwert GRS zugeleitet wird und über den zweiten Teilpfad BB ein Wert t_{BRc} für eine "charakteristische Verzögerungszeit" zugeleitet wird. Das zweite Schaltglied 2 ermittelt basierend auf dem dem zweiten Schaltglied 2 zugeleiteten Wert einen dynamischen Grenz-Regel-Stellwert GRS_{dynamisch}.

Mit Hilfe des ersten Schaltgliedes 1, wobei dem ersten Schaltglied 1 der dynamische Grenz-Regel-Stellwert GRS_{dynamisch} des zweiten Schaltgliedes 2 zugeleitet wird, erfolgt die Minimumauswahl und/oder ein Vergleich, wobei der jeweilige niedrigere Wert bzw. Stellwert zur Ansteuerung der relativen Lage der Einlassnockenwelle verwendet wird.

Beispielhaft wird dann hier als niedrigerer Wert für die Steuerung / Einstellung der Einlassnockenwelle, wenn beispielsweise zwischen den Zeitpunkten t₂ und t₃ dem Vergleichsglied 1 als Regel-Stellwert RS insbesondere der Wert 0,95 zugeleitet wird und als dynamischer Grenz-Regel-Stellwert GRS_{dynamisch} der Wert 0,85 zugeleitet wird, dann für die Verstellung der Einlassnockenwelle der Wert 0,85 verwendet. Es wird also der geringere Wert / Stellwert verwendet, so dass die Verstellung der Einlassnockenwelle auf den niedrigeren Wert begrenzt ist, also eine Verstellung der Einlassnockenwelle in Richtung "spät" maximal auf den niedrigeren Wert / Stellwert begrenzt ist.

An dieser Stelle darf darauf hingewiesen werden, dass für die Definition des zulässigen Nockenwellenstellweges also für die Verstellung der Einlassnockenwelle eine absolute Nockenwellenposition, ein Offset auf die Position im stationären Betrieb oder ein Interpolationsfaktor zwischen zwei definierten Nockenwellen-Grenzlagen bzw. eine Phasenverschiebung realisierbar ist. Ein entsprechender Wert, wie insbesondere bei dem obigen Beispiel zwischen "0" und "1" für eine Verstellung der Einlassnockenwelle von "früh" auf "spät" (oder umgekehrt), kann dann entsprechend zu diesem Beispiel korrespondieren.

Ein wesentlicher Vorteil des erfindungsgemäßen Verfahrens zu den bisher bekannten Verfahren ist im Wesentlichen die kontinuierliche, insbesondere permanente Anpassung der Einlassnockenstellweggrenzen an vorangegangene Ist-Lastzustände des Verbrennungsmotors. Eine Deaktivierung der Einlassnockenwellenverstellung ist nicht mehr notwendig.

Bei dem Verfahren wird zunächst insbesondere jedem erreichbaren Ist-Lastpunkt ein im thermisch eingeschwungenen Zustand maximal zulässiger Stellweg der Einlassnockenwelle als Parametersatz, insbesondere ein jeweiliger bestimmter stationärer Grenz-Regel-Stellwert GRS_{stationär} zugeordnet. Befindet sich der Verbrennungsmotor in einem konkreten stationären Ist-Lastpunkt so gilt der definierte und/oder berechnete jeweilige Regel-Stellwert RS für die Verstellung der Einlassnockenwelle. Bei einem Wechsel in einem thermisch belastenderen Betriebspunkt, also bei einer Lasterhöhung des Verbrennungsmotors wird ein dynamischer Grenz-Regel-Stellwert GRS_{dynamisch} ermittelt. Zur Ermittlung des dynamischen Grenz-Regel-Stellwertes GRS_{dynamisch} wird ein stationärer Grenz-Regel-Stellwert GRS_{stationär} mit dem für die Aufheizung des Brennraums typischen / charakteristischen Zeitverhalten (t_{BRc}) nachgeführt während für die Steuerung der Einlassnockenwelle insbesondere dann eine Auswahl des Minimums aus den Regel-Stellwerten und den dynamischen Grenz-Regel-Stellwerten erfolgt und der niedrigere Wert dieser beiden Stellwerte als Stellwert verwendet wird, um die Verstellung der Einlassnockenwelle in Richtung "spät" zu begrenzen. Für die Einstellung / Steuerung der Auslassnockenwelle wird eine Auswahl eines Maximums durchgeführt. Auch dies darf an dieser Stelle noch erwähnt werden.

Im Ergebnis sind die eingangs genannten Nachteile vermieden und entsprechende Vorteile erzielt.

### Bezugszeichenliste

- 1: Vergleichsglied
- 2: Schaltglied / zeitliches Verzögerungsglied
- A: erster Regelpfad
- B: zweiter Regelpfad
- BA: zweiter Regelpfad (Teilpfad)
- BB: zweiter Regelpfad (Teilpfad)
- RS: Regel-Stellwert
- RS_{Verlauf}: Regel-Stellwertverlauf
- GRS: Grenz-Regel-Stellwert
- GRS_{Verlauf}: Grenz-Regel-Stellwertverlauf
- T_{BRC}: Brennraumaufheizung
- t_{BRc}: charakteristische Verzögerungszeit für die jeweilige Brennraumaufheizung
- LP_{Soll1}: erster Soll-Lastpunkt
- LP_{Soll2}: zweiter Soll-Lastpunkt
- LP_{Ist1}: erster Ist-Lastpunkt
- LP_{Ist2}: zweiter Ist-Lastpunkt
- LP_{Ist}: Ist-Lastpunkt
- LP_{Soll}: Soll-lastpunkt
- t: Zeit
- t₁: Beginn des Soll-Lastsprungs
- t₂: Regel-Stellwert RS übersteigt bzw. entspricht Grenz-Regel-Stellwert
- GRS_{stationär} t₃: Regel-Stellwert RS unterschreitet bzw. entspricht Grenz-Regel-Stellwert GRS_{dynamisch}
- t₄: Ende des Ist-Lastsprungs
- GRS_{stationär}: stationärer Grenz-Regel-Stellwert
- GRS_{dynamisch}: dynamischer Grenz-Regel-Stellwert
- GRS_{Verlaufstationär}: stationärer Grenz-Regel-Stellwertverlauf
- GRS_{Verlaufdynamisch}: dynamischer Grenz-Regel-Stellwertverlauf

## Patentansprüche

1. Verfahren zum Steuern und/oder Regeln des Betriebs eines Verbrennungsmotors, insbesondere eines Verbrennungsmotors eines Kraftfahrzeuges, insbesondere zumindest teilweise arbeitend nach dem Miller-Verfahren, wobei mehrere unterschiedliche Soll-Lastpunkte (LP_{Soll}) und/oder unterschiedliche Ist-Lastpunkte (LP_{Ist}) des Verbrennungsmotors, insbesondere durch eine entsprechende Fahrpedalbetätigung, ansteuerbar sind, wobei bei einem Lastsprung des Verbrennungsmotors ausgehend von mindestens einem bestimmten angesteuertem geringeren erster Soll-Lastpunkt (LP_{Soll1}) und/oder ausgehend von einem zu dem ersten Soll-Lastpunkt (LP_{Soll1}) realisiertem ersten Ist-Lastpunkt (LP_{Ist1}) ein - verglichen zum ersten Soll-Lastpunkt (LP_{Soll1}) und/oder verglichen zum Ist-Lastpunkt (LP_{Ist}) - bestimmter höherer zweiter Soll-Lastpunkt (LP_{Soll2}) angesteuert wird, wobei die relative Lage bzw. Positionierung einer Einlassnockenwelle zu einer Kurbelwelle zur Steuerung von Einlassventilen verstellbar und/oder einstellbar ist, insbesondere über die relative Lage der Einlassnockenwelle die jeweilige Steuerung der Einlassventile von früh auf spät (oder umgekehrt) realisierbar ist, wobei die jeweiligen bestimmten relativen Lagen der Einlassnockenwelle zur Kurbelwelle mit Hilfe von Regel-Stellwerten (RS) des Motorsteuergerätes für die Steuerung der Einlassventile zwischen dem Stellwert 1 für spät und dem Stellwert 0 für früh, definiert und/oder gesteuert werden, und wobei zumindest für einen bestimmten Regelzeitraum zur Realisierung des Lastsprunges, nämlich zumindest zwischen dem Zeitpunkt des Beginns des Soll-Lastsprunges (t₁) bis zu dem Zeitpunkt des Endes des zu dem Soll-Lastsprung korrespondierenden Ist-Lastsprunges (t₄) ein bestimmter Regel-Stellwertverlauf (RS_{Verlauf}) und/oder bestimmte Regel-Stellwerte (RS) zur Steuerung der relativen Lage der Einlassnockenwelle abgespeichert ist bzw. sind, wobei zumindest für den bestimmten Regelzeitraum ein Grenz-Regel-Stellwertverlauf (GRS_{Verlauf}) bestimmt ist und/oder bestimmte Grenz-Regel-Stellwerte (GRS) definiert sind und/oder berechnet werden, wobei dann zu bestimmten jeweiligen Zeitpunkten innerhalb des Regelzeitraumes ein Vergleich der jeweiligen Regel-Stellwerte (RS) mit den jeweiligen Grenz-Regel-Stellwerten (GRS) erfolgt, wobei dann zur Ansteuerung der relativen Lage der Einlassnockenwelle der jeweilige niedrigere Stellwert verwendet wird, wobei innerhalb des Regelzeitraumes für mehrere bestimmte jeweilige Ist-Lastpunkte (LP_{Ist}) jeweilige bestimmte stationäre Grenz-Regel-Stellwerte (GRS_{stationär}) definiert sind und/oder für den Regelzeitraum ein stationärer Grenz-Regel-Stellwertverlauf (GRS_{Verlaufstationär}) bestimmt und/oder definiert ist, wobei mit Hilfe der jeweiligen bestimmten stationären Grenz-Regel-Stellwerte (GRS_{stationär}) in Abhängigkeit einer Brennraumaufheizung (T_{BRC}) dynamische Grenz-Regel-Stellwerte (GRS_{dynamisch}) ermittelt und/oder berechnet werden und /oder aus dem stationären Grenz-Regel-Stellwertverlauf (GRS_{Verlaufstationär}) in Abhängigkeit eines Verlaufes einer Brennraumaufheizung (T_{BRC}) ein dynamischer Grenz-Regel-Stellwertverlauf (GRS_{Verlaufdynamisch}) ermittelt und/oder berechnet wird, und wobei die jeweiligen dynamischen Grenz-Regel-Stellwerte (GRSdynamisch) und/oder die sich aus dem dynamischen Grenz-Regel-Stellwertverlauf (GRSVerlaufdynamisch) ergebenden dynamischen Grenz-Regel-Stellwerte (GRSdynamisch) bei der Steuerung und dem Vergleich als jeweilige Grenz-Regel-Stellwerte (GRS) verwendet werden.

2. Verfahren nach Anspruch 1, **dadurch gekennzeichnet, dass** durch die Verwendung des jeweils niedrigeren Stellwertes eine Verstellung der Einlassnockenwelle in Richtung "spät" entsprechend auf diesen entsprechenden Wert bzw. Stellwert begrenzt ist.

3. Verfahren nach Anspruch 1 oder 2, **dadurch gekennzeichnet, dass** die bestimmten stationären Grenz-Regel-Stellwerte (GRS_{stationär}) für bestimmte stationäre Ist-Lastpunkte (LP_{Ist}) auf einem Prüfstand bei stationären bestimmten Ist-Lastzuständen, ermittelt worden sind.

4. Verfahren nach einem der vorstehenden Ansprüche, **dadurch gekennzeichnet, dass** die bestimmten stationären Grenz-Regel-Stellwerte (GRS_{stationär}), im Motorsteuergerät abgelegt und/oder abgespeichert sind, insbesondere als ein Kennfeld und/oder als stationärer Grenz-Regel-Stellwertverlauf (GRS_{Verlaufstationär}) abgespeichert ist bzw. sind.

5. Verfahren nach einem der vorstehenden Ansprüche, **dadurch gekennzeichnet, dass** der Druck im Ansaugtrakt mit Hilfe eines vorgesehenen Abgasturboladers zumindest teilweise gesteuert und/oder realisiert wird.

6. Verfahren nach einem der vorstehenden Ansprüche, **dadurch gekennzeichnet, dass** jeweilige charakteristische Verzögerungszeiten (t_{BRc}), insbesondere auf einem Prüfstand, ermittelt werden, wobei dann die jeweiligen Werte der charakteristischen Verzögerungszeiten (t_{BRc}) jeweils einer jeweiligen Verzögerungszeit entsprechen bis der Verbrennungsmotor seinen neuen Aufheizzustand erreicht hat.

7. Verfahren nach einem der vorstehenden Ansprüche, **dadurch gekennzeichnet, dass** das Verfahren bei einem als Otto-Motor ausgeführtem Verbrennungsmotor realisiert wird.

8. Steuer- und/oder Regelkreis arbeitend gemäß dem Verfahren nach einem der Ansprüche 1 bis 7, **dadurch gekennzeichnet, dass** der Steuer- und/oder Regelkreis mindestens ein erstes als Vergleichsglied ausgeführtes Schaltglied (1) und mindestens ein zweites als zeitliches Verzögerungsglied ausgeführtes Schaltglied (2) aufweist.

9. Steuer- und/oder Regelkreis nach Anspruch 8, **dadurch gekennzeichnet, dass** über einen ersten Regelpfad (A) zunächst dem ersten Schaltglied (1) die vom Motorsteuergerät grundsätzlich im Motorsteuergerät abgespeicherten Regel-Stellwerte (RS) zuleitbar sind.

10. Steuer- und/oder Regelkreis nach Anspruch 9, **dadurch gekennzeichnet, dass** ein zweiter Regelpfad (B) vorgesehen ist, der zwei Teilpfade (BA bzw. BB) aufweist, wobei über einen ersten Teilpfad (BA) dem zweiten Schaltglied (2) ein stationärer Grenz-Regel-Stellwert (GRS_{stationär}) zuleitbar ist und über den zweiten Teilpfad (BB) ein Wert für eine charakteristische Verzögerungszeit (t_{BRc}) für eine Brennraumaufheizung zuleitbar ist.

11. Steuer- und/oder Regelkreis nach Anspruch 10, **dadurch gekennzeichnet, dass** durch das zweite Schaltglied (2) basierend auf dem zweiten Schaltglied (2) zugeleiteten Wert der charakteristischen Verzögerungszeit (t_{BRc}) einen dynamischen Grenz-Regel-Stellwert (GRS_{dynamisch}) ermittelbar ist.

12. Steuer- und/oder Regelkreis nach Anspruch 11, **dadurch gekennzeichnet, dass** mit Hilfe des ersten Schaltgliedes (1), wobei dem ersten Schaltglied (1) der dynamische Grenz-Regel-Stellwert (GRS_{dynamisch}) des zweiten Schaltgliedes zuleitbar ist, eine Minimumauswahl und/oder ein Vergleich ermöglicht ist, wobei der jeweilige niedrigere Wert bzw. Stellwert zur Ansteuerung der relativen Lage der Einlassnockenwelle verwendbar ist.

## Claims

1. Method for controlling and/or regulating the operation of an internal combustion engine, especially an internal combustion engine of a motor vehicle, especially at least partly operating according to the Miller method, wherein a plurality of different target load points (LPₛₒₗₗ) and/or different actual load points (LPᵢₛₜ) of the internal combustion engine can be set, in particular by means of an appropriate accelerator pedal actuation, wherein, in the event of an increase in the load of the internal combustion engine, beginning from at least one specific activated lower first target load point (LPₛₒₗₗ) and/or starting from a first actual load point (LPᵢₛₜ₁) implemented at the first target load point (LPₛₒₗₗ), a specific higher second target load point (LPₛₒₗₗ₂) - as compared with the first target load point (LPₛₒₗₗ₁) and/or compared with the actual load point (LPᵢₛₜ) - is set, wherein the relative position or positioning of an inlet camshaft relative to a crankshaft for the control of inlet valves can be displaced and/or adjusted, in particular the respective control of the inlet valves from advanced to retarded (or vice versa) can be implemented via the relative position of the inlet camshaft, wherein the respective specific relative positions of the inlet camshaft relative to the crankshaft are defined and/or controlled with the aid of control manipulated values (RS) of the engine control unit for the control of the inlet valves between the manipulated value 1 for retarded and the manipulated value 0 for advanced, and wherein, at least for a specific control time period for the implementation of the increase in load, namely at least between the point in time of the start of the target increase in load (t₁) until the point in time of the end of the actual increase in load (t₄) corresponding to the target increase in load, a specific control manipulated variable curve (RS_{Verlauf}) and/or specific control manipulated values (RS) for controlling the relative position of the inlet camshaft is or are stored, wherein, at least for the specific control time period, a limiting control manipulated value curve (GRS_{Verlauf}) is determined and/or specific limiting control manipulated values (GRS) are defined and/or calculated, wherein, at specific respective points in time within the control time period, the respective control manipulated values (RS) are then compared with the respective limiting control manipulated values (GRS), wherein the respective lower manipulated value is then used to control the relative position of the inlet camshaft, wherein, within the control time period, for a plurality of specific respective actual load points (LPᵢₛₜ), respective specific steady-state limiting control manipulated values (GRS_{stationär}) are defined and/or, for the control time period, a steady-state limiting control manipulated value curve (GRS_{Verlaufstationär}) is determined and/or defined, wherein, by using the respective determined steady-state limiting control manipulated values (GRS_{stationär}), depending on combustion chamber heating (T_{BRC}), dynamic limiting control manipulated values (GRS_{dynamisch}) are determined and/or calculated, and/or, from the steady-state limiting control manipulated value curve (GRS_{Verlaufstationär}), depending on a curve of combustion chamber heating (T_{BRC}), a dynamic limiting control manipulated value curve (GRS_{Verlaufdynamisch}) is determined and/or calculated, and wherein the respective dynamic limiting control manipulated values (GRS_{dynamisch}) and/or the dynamic limiting control manipulated values (GRS_{dynamisch}) resulting from the dynamic limiting control manipulated value curve (GRS_{Verlaufdynamisch}) are used as respective limiting control manipulated values (GRS) during the control and the comparison.

2. Method according to Claim 1, **characterized in that** as a result of the use of the respective lower manipulated value, a displacement of the inlet camshaft in the "retarded" direction is accordingly limited to this corresponding value or manipulated value.

3. Method according to Claim 1 or 2, **characterized in that** the specific steady-state limiting control manipulated values (GRS_{stationär}) for specific steady-state actual load points (LPᵢₛₜ) have been determined on a test bench at steady-state specific actual load states.

4. Method according to one of the preceding claims, **characterized in that** the specific steady-state limiting control manipulated values (GRS_{stationär}) are deposited and/or stored in the engine control unit and, in particular, is or are stored as a characteristic map and/or as a steady-state limiting control manipulated value curve (GRS_{Verlaufstationär}).

5. Method according to one of the preceding claims, **characterized in that** the pressure in the intake tract is at least partly controlled and/or implemented with the aid of an exhaust gas turbocharger that is provided.

6. Method according to one of the preceding claims, **characterized in that** respective characteristic delay times (t_{BRc}) are determined, in particular on a test bench, wherein the respective values of the characteristic delay times (t_{BRc}) then each correspond to a respective delay time until the internal combustion engine has reached its new heated-up state.

7. Method according to one of the preceding claims, **characterized in that** the method is implemented in an internal combustion engine designed as a spark-ignition engine.

8. Open- and/or closed-loop control circuit operating according to the method according to one of Claims 1 to 7, **characterized in that** the open- and/or closed-loop control circuit has at least one logic element (1) designed as a comparison element and at least one second logic element (2) designed as a time delay element.

9. Open- and/or closed-loop control circuit according to Claim 8, **characterized in that** the control manipulated values (RS) basically stored in the engine control unit can firstly be fed from the engine control unit to the first logic element (1) via a first control path (A).

10. Open- and/or closed-loop control circuit according to Claim 9, **characterized in that** a second control path (B) is provided, which has two sub-paths (BA and BB) wherein a steady-state limiting control manipulated value (GRS_{stationär}) can be fed to the second logic element (2) via a first sub-path (BA), and a value for a characteristic delay time (t_{BRc}) for combustion chamber heating can be fed via the second sub-path (BB).

11. Open- and/or closed-loop control circuit according to Claim 10, **characterized in that** on the basis of the value of the characteristic delay time (t_{BRc}) fed to the second logic element (2), a dynamic limiting control manipulated value (GRS_{dynamisch}) can be determined by the second logic element (2).

12. Open- and/or closed-loop control circuit according to Claim 11, **characterized in that** by using the first logic element (1), wherein the dynamic limiting control manipulated variable (GRS_{dynamisch}) from the second logic element can be fed to the first logic element (1), a minimum selection and/or a comparison is made possible, wherein the respective lower value or manipulated value can be used to control the relative position of the inlet camshaft.

## Revendications

1. Procédé de commande et/ou de régulation du fonctionnement d'un moteur à combustion interne, notamment d'un moteur à combustion interne d'un véhicule automobile, notamment fonctionnant au moins partiellement selon le procédé Miller, plusieurs points de charge cibles différents (LPₛₒₗₗ) et/ou points de charge réels différents (LPᵢₛₜ) du moteur à combustion interne pouvant être commandés, notamment par un actionnement correspondant de la pédale d'accélérateur, en cas d'un brusque saut de charge du moteur à combustion interne à partir d'au moins un premier point de charge cible inférieur commandé déterminé (LP_{Soll1}) et/ou à partir d'un premier point de charge réel (LPᵢₛₜ₁) réalisé au premier point de charge cible (LP_{Soll1}) un deuxième point de charge cible supérieur (LP_{Soll2}) déterminé par rapport au premier point de charge cible (LP_{Soll1}) et/ou par rapport au point de charge réel (LPᵢₛₜ) - étant commandé, la position relative ou le positionnement relatif d'un arbre à cames d'admission par rapport à un vilebrequin de commande de soupapes d'admission pouvant être réglé(e) et/ou ajusté(e), notamment la commande respective des soupapes d'admission d'avance à retard (ou inversement) pouvant être réalisée par le biais de la position relative de l'arbre à cames d'admission, les positions relatives déterminées respectives de l'arbre à cames d'admission par rapport au vilebrequin étant définies et/ou commandées à l'aide de valeurs de réglage et de régulation (RS) de l'unité de commande de moteur destinée à commander les soupapes d'admission entre la valeur de réglage 1 du retard et la valeur de réglage 0 de l'avance, et une courbe de valeur de réglage et de régulation déterminée (RS_{Verlauf}) et/ou des valeurs de réglage et de régulation (RS) destinées à commander la position relative de l'arbre à cames d'admission étant mémorisées au moins pendant un intervalle de temps de régulation déterminé pour réaliser le saut de charge, à savoir au moins entre l'instant du début du saut de charge cible (t₁) et l'instant de la fin du saut de charge réelle (t₄) correspondant au saut de charge cible, une courbe de valeurs de réglage et de régulation limite (GRS_{Verlauf}) étant déterminée et/ou des valeurs de réglage et de régulation limite déterminées (GRS) étant définies et/ou calculées au moins pendant l'intervalle de temps de régulation déterminé, une comparaison des valeurs de réglage et de régulation respectives (RS) aux valeurs de réglage et de régulation limites respectives (GRS) étant ensuite effectuée à des instants respectifs déterminés pendant l'intervalle de temps de régulation, la valeur de réglage inférieure respective étant alors utilisée pour commander la position relative de l'arbre à cames d'admission, des valeurs de réglage et de régulation limites stationnaires déterminées respectives (GRSₛₜₐₜᵢₒₙₙₐᵢᵣₑ) étant définies pendant l'intervalle de temps de régulation pour plusieurs points de charge réels respectifs déterminés (LPist) et/ou une courbe de valeurs de réglage et de régulation limites stationnaires (GRS_{Verlaufstationär}) étant déterminée et/ou définie pour l'intervalle de temps de régulation, des valeurs de réglage et de régulation limites dynamiques (GRS_{dynamisch}) étant déterminées et/ou calculées à l'aide des valeurs de réglage et de régulation limites stationnaires déterminées respectives (GRS_{stationär}) en fonction du chauffage (T_{BRC}) de la chambre de combustion et/ou une courbe de valeurs de réglage et de régulation limites dynamiques (GRS_{Verlaufdynamisch}) étant déterminée et/ou calculée à partir de la courbe de valeurs de réglage et de régulation limites stationnaires (GRS_{Verlaufstationär}) en fonction d'une courbe d'un chauffage (T_{BRC}) de la chambre de combustion, et les valeurs de réglage et de régulation limites dynamiques respectives (GRS_{dynamisch}) et/ou les valeurs de réglage et de régulation limites dynamiques (GRS_{dynamisch}) résultant de la courbe de valeurs de réglage et de régulation limites dynamiques (GRSVerlaufdynamisch) étant utilisées pendant la commande et la comparaison comme valeurs de régulation limites respectives (GRS).

2. Procédé selon la revendication 1, **caractérisé en ce qu'**un réglage de l'arbre à cames d'admission dans le sens « retard » est limité de manière correspondante à cette valeur correspondante ou valeur de réglage à l'aide de la valeur de réglage inférieure respective.

3. Procédé selon la revendication 1 ou 2, **caractérisé en ce que** les valeurs de réglage et de régulation limites stationnaires (GRS_{stationär}) pour des points de charge réels stationnaires spécifiques (LPᵢₛₜ) ont été déterminées sur un banc d'essai avec des états de charge réels stationnaires déterminés.

4. Procédé selon l'une des revendications précédentes, **caractérisé en ce que** les valeurs de réglage et de régulation limites stationnaires déterminées (GRS_{stationär}) sont stockées et/ou mémorisées dans l'unité de commande de moteur, notamment sont mémorisées sous la forme de diagramme caractéristique et/ ou de courbe de valeurs de réglage et de régulation limites stationnaires (GRS_{Verlaufstationär}).

5. Procédé selon l'une des revendications précédentes, **caractérisé en ce que** la pression dans le conduit d'admission est au moins partiellement commandée et/ou réalisée à l'aide d'un turbocompresseur à gaz d'échappement prévu.

6. Procédé selon l'une des revendications précédentes, **caractérisé en ce que** des temps de retard caractéristiques respectifs (t_{BRC}) sont déterminés, notamment sur un banc d'essai, les valeurs respectives des temps de retard caractéristiques (t_{BRC}) correspondant chacune à un temps de retard respectif jusqu'à ce que le moteur à combustion interne ait atteint son nouvel état de chauffe.

7. Procédé selon l'une des revendications précédentes, **caractérisé en ce que** le procédé est mis en œuvre dans un moteur à combustion interne conçu comme un moteur Otto.

8. Circuit de commande et/ou de régulation fonctionnant selon le procédé selon l'une des revendications 1 à 7, **caractérisé en ce que** le circuit de commande et/ou de régulation comporte au moins un premier élément de commutation (1) conçu comme un élément de comparaison et au moins un deuxième élément de commutation conçu comme un élément de retard temporel (2).

9. Circuit de commande et/ou de régulation selon la revendication 8, **caractérisé en ce que** les valeurs de réglage et de régulation (RS), mémorisées par l'unité de commande de moteur en principe dans l'unité de commande de moteur, peuvent d'abord être amenées au premier élément de commutation (1) par le biais d'une premier chemin de régulation (A).

10. Circuit de commande et/ou de régulation selon la revendication 9, **caractérisé en ce qu'**il est prévu un deuxième chemin de régulation (B) qui comporte deux sous-chemins (BA ou BB), une valeur de réglage et de régulation limite stationnaire (GRS_{stationär}) pouvant être amenée au deuxième élément de commutation (2) par le biais d'un premier sous-chemin (BA) et une valeur d'un temps de retard caractéristique (t_{BRC}) du chauffage de la chambre de combustion pouvant être amenée par le biais du deuxième sous-chemin (BB).

11. Circuit de commande et/ou de régulation selon la revendication 10, **caractérisé en ce qu'**une valeur de de régulation limite dynamique (GRS_{dynamisch}) peut être déterminée par le deuxième élément de commutation (2) sur la base de la valeur du temps de retard caractéristique (t_{BRC}) amenée au deuxième élément de commutation (2).

12. Circuit de commande et/ou de régulation selon la revendication 11, **caractérisé en ce qu'**une sélection minimale et/ou une comparaison étant rendue possible, à l'aide du premier élément de commutation (1), la valeur de réglage et de régulation limite dynamique (GRS_{dynamisch}) du deuxième élément de commutation pouvant être amenée au premier élément de commutation (1), la valeur ou valeur de réglage inférieure respective pouvant être utilisée pour commander la position relative de l'arbre à cames d'admission.
